(19) Europäisches Patentamt / European Patent Office / Office européen des brevets

(11) EP 3 310 823 B1

(12) **FASCICULE DE BREVET EUROPEEN**

(45) Date de publication et mention de la délivrance du brevet:
**17.04.2024 Bulletin 2024/16**

(21) Numéro de dépôt: **16734584.2**

(22) Date de dépôt: **17.06.2016**

(51) Classification Internationale des Brevets (IPC):
***C08F 236/10*** (2006.01) ***C08F 2/00*** (2006.01)
***C08F 2/06*** (2006.01) ***C08F 4/48*** (2006.01)

(52) Classification Coopérative des Brevets (CPC):
**C08F 236/10; C08F 2/001; C08F 2/06; C08F 4/48**

(86) Numéro de dépôt international:
**PCT/EP2016/064051**

(87) Numéro de publication internationale:
**WO 2016/203000 (22.12.2016 Gazette 2016/51)**

(54) **PROCÉDÉ DE POLYMÉRISATION CONTINU D'ÉLASTOMÈRE DIÉNIQUE**

KONTINUIERLICHES POLYMERISATIONSVERFAHREN FÜR DIENKAUTSCHUKE

CONTINUOUS POLYMERIZATION PROCESS FOR DIENIC ELASTOMERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.06.2015 FR 1555545**

(43) Date de publication de la demande:
**25.04.2018 Bulletin 2018/17**

(73) Titulaire: **Compagnie Générale des Etablissements Michelin**
**63000 Clermont-Ferrand (FR)**

(72) Inventeurs:
- **DORATO, Margarita**
  **63040 Clermont-Ferrand Cedex 09 (FR)**
- **FLESINSKI, Lionel**
  **63040 Clermont-Ferrand Cedex 09 (FR)**
- **KIENER, Pierre**
  **63040 Clermont-Ferrand Cedex 09 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**WO-A1-2016/001372** **US-A1- 2013 090 440**
**US-A1- 2015 086 735**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 310 823 B1

## Description

La présente invention se rapporte à un procédé de synthèse en continu, au moyen de plusieurs réacteurs en série, d'un élastomère diénique présentant une distribution étroite de poids moléculaires.

Depuis que les économies de carburant et la nécessité de protéger l'environnement sont devenues une priorité, il est souhaitable de produire des polymères possédant de bonnes propriétés mécaniques et une hystérèse aussi faible que possible afin de pouvoir les mettre en oeuvre sous forme de compositions caoutchouteuses utilisables pour la fabrication de divers produits semi-finis entrant dans la constitution d'enveloppes de pneumatiques tels que, par exemple, des sous-couches, des gommes de liaison entre caoutchoucs de différentes natures ou d'enrobage de renforts métalliques ou textiles, des gommes de flancs ou des bandes de roulement et obtenir des pneumatiques aux propriétés améliorées, notamment possédant une résistance au roulement réduite.

La réduction de l'hystérèse des mélanges est un objectif permanent de l'industrie du pneumatique afin de limiter la consommation de carburant et de préserver ainsi l'environnement. Cela doit toutefois se faire en conservant intacte l'aptitude à la mise en oeuvre des mélanges.

Pour atteindre l'objectif de baisse d'hystérèse, de nombreuses solutions ont déjà été expérimentées. En particulier, on peut citer la modification de la structure des polymères et des copolymères diéniques en fin de polymérisation au moyen d'agents de fonctionnalisation, de couplage ou d'étoilage dans le but d'obtenir une bonne interaction entre le polymère ainsi modifié et la charge, qu'il s'agisse du noir de carbone ou d'une charge inorganique renforçante.

La réduction de la distribution des masses moléculaires avant fonctionnalisation de l'élastomère permet également d'améliorer le compromis hystérèse / mise en oeuvre du matériau.

La synthèse des élastomères avec un procédé de type discontinu est préférable à cet égard, car ce type de procédé permet un contrôle de la distribution moléculaire afin d'obtenir des copolymères diéniques avec une distribution étroite de poids moléculaire avant fonctionnalisation, à la différence d'un procédé continu qui donne accès à une distribution large de poids moléculaires.

On peut citer à titre d'exemple les brevets US 6 313 232, EP 1318172 et EP 1 829 906 affirmant que les produits présentant une faible polydispersité sont favorables à une hystérèse réduite. Les polymères linéaires à distributions moléculaires étroites présentent en plus une mise en oeuvre améliorée.

Le brevet US 5 587 420 décrit une méthode de polymérisation de monomères diéniques en solution en solvant hydrocarboné utilisant comme initiateur un composé organolithié en discontinu. Un composé organotin est ajouté pendant ou à la fin du batch. Ce type de procédé discontinu est moins productif et moins économique qu'un procédé continu. Cela est décrit dans le brevet US 6 313 232 qui décrit un procédé continu avec une première étape de polymérisation en présence d'un composé dérivé de l'étain suivi d'une étape de fonctionnalisation à l'étain en sortie du réacteur de production d'un polymère diénique avec des propriétés physiques améliorées, dont la diminution de l'hystérèse. Mais les valeurs de polydispersité de polymères synthétisés avec cette méthode ne sont pas indiquées.

Par ailleurs, pour que le polymère obtenu puisse être valorisé, le procédé de synthèse doit être compétitif et économique. Dans ce sens, un procédé de type continu est préférable. Cependant, ce type de procédé avec un réacteur parfaitement agité ne permet pas un contrôle de l'indice de polymolécularité comme les procédés du type discontinu.

De nombreux brevets décrivent la synthèse d'élastomères fonctionnels en procédé continu. On peut citer le brevet JP 1988-235305 (63-235305JP) qui décrit un procédé continu de polymérisation économique où le polymère obtenu a une distribution moléculaire large.

Le but de l'invention est donc de trouver un procédé continu économique, capable de synthétiser des élastomères diéniques avec une faible distribution de masse moléculaire qui permet un gain sur le compromis hystérèse/mise en oeuvre du matériau ainsi synthétisé.

Le brevet EP 1 829 906 décrit un procédé continu de production des copolymères diéniques et vinyle aromatiques en présence d'un agent de modification de la polarité (THFA-ethyl) afin d'obtenir une incorporation statistique des monomères. La synthèse se fait au moyen d'au moins deux réacteurs en série. Le copolymère obtenu présente un indice de polymolécularité compris entre 1,6 et 2,5.

On peut également citer le brevet US6372863B1 qui décrit un procédé continu de polymérisation du styrène et du butadiène dans deux réacteurs en série, selon lequel la totalité du styrène est introduit dans le premier réacteur avec une partie seulement du butadiène, le restant du butadiène étant introduit dans le deuxième réacteur. Ce procédé permet de synthétiser des élastomères statistiques de faible taux de vinyl avec une absence de blocs styrène.

Les inventeurs ont maintenant découvert de façon surprenante que les buts de l'invention pouvaient être obtenus par un procédé de synthèse en continu comprenant plusieurs réacteurs en série, la température du dernier réacteur étant supérieure à la température du premier réacteur, du solvant et/ou du monomère étant éventuellement réinjecté dans les réacteurs autres que le premier, à une pureté et dans des proportions telles que définies ci-après, l'élastomère diénique obtenu présentant un indice de polymolécularité variant de 1,1 à 2 et un faible taux de chaînes mortes.

L'invention a donc pour objet un procédé de synthèse en continu d'un élastomère diénique au moyen de n

réacteurs r1 à rn, équipés d'un système d'agitation interne, supposés parfaitement agités, disposés en série, n variant de 2 à 15, de préférence de 2 à 9, le réacteur r1 étant alimenté par une solution d'entrée comprenant un solvant, un ou plusieurs monomères, un initiateur de polymérisation et un agent polaire, un ou plusieurs des réacteurs r2 à rn étant en outre alimenté(s) par réinjection d'une solution purifiée comprenant du solvant et/ou du ou des monomères. La pureté de la ou de chaque solution réinjectée est telle que la proportion du nombre de chaînes mortes dans le flux en sortie du réacteur rn est par rapport au nombre de chaînes vivantes initiées dans le réacteur r1 significativement minimisée, et est inférieure à 30%, de préférence inférieure à 10%. En effet, le taux de chaînes mortes contribue à la qualité de l'indice de polymolécularité. Plus le taux de chaînes mortes est élevé, plus son impact sur l'indice de polymolécularité tend à augmenter ce dernier.

Dans le cadre de la présente demande, on appelle réinjection le fait de répéter l'action d'injection dans un réacteur ri', différent du réacteur r1, déjà alimenté par le flux issu de ri'-1. La réinjection peut être faite directement dans un ou plusieurs des réacteurs, ou, avantageusement, par mélangeage au flux issu de ri'-1. La réinjection peut être faite avec des flux de composition identique ou différente du flux d'alimentation de r1. Quand la réinjection a lieu dans au moins deux réacteurs, les natures de ces réinjections peuvent être identiques ou différentes. On appelle monomère réinjecté, le monomère injecté dans ri' non issu du flux provenant de ri'-1.

Dans le cas d'une polymérisation anionique, la chaîne vivante est un carbanion. Le carbanion est une espèce très réactive. Il réagit avec des espèces protiques ou des espèces électrophiles.

Aussi si la charge du premier réacteur contient des impuretés protiques (alcools, eau, acides ...) ou électrophiles (carbonyles, ...), l'initiateur réagira d'abord avec ces impuretés pour conduire à des espèces inactives (alcoolates) incapables d'initier la polymérisation des monomères. C'est la raison pour laquelle le premier réacteur est alimenté par une solution d'entrée qui comprend les monomères et l'initiateur. Ainsi, l'initiateur est mis en contact avec l'ensemble des constituants de la solution d'entrée préalablement à leur introduction dans le réacteur afin de neutraliser les impuretés. La différence entre la quantité d'initiateur introduit dans la solution d'entrée du réacteur r1 et la quantité d'initiateur ayant réagi avec les impuretés constitue la quantité d'initiateur actif. Le nombre de chaînes vivantes initiées dans le réacteur r1 est équivalent à cette quantité d'initiateur actif dans le réacteur r1.

En revanche pour la ou les réinjections ultérieures entre les réacteurs, la neutralisation des impuretés apportées par la réinjection se fera par le carbanion polymère présent dans ces réacteurs. Cette neutralisation empêche la chaine de polymère de se propager et la chaine devient donc morte. Cette espèce n'est plus réactive avec les agents de stoppage, fonctionnalisation, couplage ou étoilage éventuels.

C'est pourquoi, en dehors de la charge du premier réacteur, il est nécessaire de contrôler la pureté de chaque solution réinjectée afin de garantir un taux de polymère mort en sortie du réacteur rn le plus faible possible, soit inférieur à 30% en nombre, de préférence inférieur à 10% en nombre par rapport au nombre total de chaînes initiées dans le réacteur r1.

Selon l'invention, la température de chaque réacteur varie de 30 à 150°C et est supérieure ou égale à la température du réacteur qui le précède immédiatement, la température du réacteur rn étant supérieure à la température du réacteur r1.

Selon l'invention :

- la quantité massique $M_1$ de monomère(s) introduit(s) dans le réacteur r1 est telle que

$$0{,}1 < \frac{M1}{\sum_{i=1}^{n} Mi} \leq 1$$

- la quantité massique $M_{i'}$ de monomère(s) réinjecté(s) dans le réacteur ri', lorsque $M_{i'} \neq 0$, i' variant de 2 à n, est telle que

$$0 \leq \frac{Mi'}{\sum_{1}^{n} Mi} < 0{,}9$$

et telle que Mi' représente de 5 à 100% en masse de la masse de la solution réinjectée dans le réacteur ri', lorsque $M_{i'} \neq 0$,
où Mi est la quantité massique de monomère(s) introduit(s) dans le réacteur ri, i variant de 1 à n,
la quantité massique de l'ensemble des monomères rentrant dans les réacteurs r1 à rn représentant 5 à 25% en masse de toutes les entrées massiques du procédé des réacteurs r1 à rn,

- la conversion massique globale Ci" dans chaque réacteur ri" est telle que

$$\frac{Cn}{n} - 0,2 < \frac{Ci''}{i''} < \frac{Cn}{n} + 0,2$$

où

$$Ci'' = \frac{Pi''}{\sum_1^n Mi}$$

où Pi" est la masse de polymère formé à la sortie du réacteur ri", i" variant de 1 à n-1,

Cn est la conversion massique globale dans le réacteur rn, avec

$$Cn = \frac{Pn}{\sum_1^n Mi}$$

où Pn est la masse de polymère total à la sortie du réacteur rn.

Selon le procédé de l'invention, il est possible de synthétiser en continu un élastomère diénique présentant un indice de polymolécularité variant de 1,1 à 2, de préférence compris entre 1,1 et 1,7, plus préférentiellement variant de 1,2 à 1,6.

Par quantité massique de l'ensemble des monomère(s) rentrant dans les réacteurs r1 à rn, on entend la somme de la quantité massique de monomère(s) introduit dans le réacteur r1 par la solution d'entrée et des quantités massiques du ou des monomères réinjectés dans l'un ou plusieurs des réacteurs r2 à rn.

Par indice de polymolécularité, également désigné par indice de polydispersité, on entend le rapport entre la masse moléculaire moyenne en poids et la masse moléculaire moyenne en nombre. Les masses moléculaires moyennes en poids et en nombre sont mesurées par chromatographie d'exclusion stérique.

Le procédé selon l'invention permet de contrôler l'indice de polymolécularité du polymère synthétisé par le contrôle de la conversion dans chaque réacteur et par le nombre de réacteurs.

Le contrôle de la conversion dans chaque réacteur est assuré par la température, le temps de séjour, la quantité d'agent polaire et la quantité de monomère entrant dans chaque réacteur.

L'équilibrage des conversions dans chaque réacteur, tel qu'indiqué précédemment, permet de minimiser l'indice de polymolécularité.

En travaillant à température croissante selon l'invention, on accélère la propagation dans les réacteurs suivants et on équilibre ainsi les conversions.

La réinjection éventuelle d'une partie des monomères dans un ou plusieurs des réacteurs à partir du deuxième impacte la quantité de monomères présents dans le réacteur et le temps de séjour au sein de celui-ci. Ainsi, ces réinjections, qui constituent une mise en oeuvre avantageuse du procédé de l'invention, contribuent également à l'équilibrage des conversions, et comme expliqué précédemment, au contrôle de l'indice de polymolécularité.

De façon avantageuse, la très grande pureté des monomères réinjectés permet de diminuer l'impact des réactions secondaires qui ont tendance à élargir la distribution moléculaire du polymère formé.

Les temps de séjour et les températures sont également choisis pour ne pas favoriser ces réactions secondaires.

De préférence, les réacteurs sont équipés d'un mécanisme d'agitation interne.

De préférence, le nombre de réacteurs est égal à 2 ou 3, de préférence 2.

Lorsque le nombre de réacteur est égal à 2, le procédé selon l'invention présente au moins l'une des caractéristiques suivantes et de préférence toutes les caractéristiques suivantes :

- une réinjection d'une solution comprenant du ou des monomères est effectuée dans le réacteur r2,
- la pureté de la solution réinjectée dans le réacteur r2 est telle que la proportion du nombre de chaînes mortes dans le flux en sortie du réacteur r2 est inférieur à 10%, préférentiellement inférieure à 5% du nombre de chaînes vivantes initiées dans le réacteur r1,
- la température des réacteurs r1 et r2 varie de 20 à 150°C, de préférence de 30°C à 120°C la température du réacteur r2 étant supérieure à la température du réacteur r1,

- la quantité massique de monomère(s) introduit(s) dans le réacteur r1 est supérieure à 10% et inférieure à 100% de la quantité massique totale des monomères introduits dans les réacteurs r1 et r2,
- la quantité massique de monomère(s) réinjecté(s) dans le réacteur r2 est inférieure à 90% en poids du poids total de monomère(s) injecté(s) dans le réacteur r1 et réinjecté(s) dans le réacteur r2,
- la quantité massique de l'ensemble des monomères rentrant dans les réacteurs r1 à rn représentant 5 à 25% en masse de la somme des entrées massiques des réacteurs r1 et r2,
- la conversion massique globale dans le réacteur 1 est égale à la moitié de la conversion massique globale dans le réacteur 2, +/- 20%.

De préférence, le temps de séjour dans le réacteur ri est compris entre 1 et 60 minutes, de préférence entre 5 et 60, de préférence encore entre 10 et 50 minutes. Il est calculé de la manière suivante :

$$\tau_i = \frac{V_i}{Q_{Vn}}$$

Avec :

- Vi, volume réactionnel Ri, i variant de 1 à n
- QVn = débit volumique sortant du réacteur n.

Comme expliqué précédemment, une solution comprenant du ou des monomères peut être réinjectée dans un ou plusieurs des réacteurs r2 à rn.

L'une ou plusieurs des solutions réinjectées peut contenir un agent polaire.

La pureté de chaque solution réinjectée est telle que la proportion du nombre de chaînes mortes dans le flux en sortie du réacteur rn par rapport au nombre de chaînes vivantes initiées dans le réacteur r1 est inférieure à 30% en nombre, de préférence inférieur à 10% en nombre et plus préférentiellement inférieur à 5% en nombre.

Par pureté d'une solution réinjectée, on entend la proportion massique de monomère(s) éventuel, et de solvant éventuel et d'agent polaire éventuel, par rapport à la masse totale de la solution réinjectée.

Chaque solution réinjectée contient du solvant purifié et/ou des monomères purifiés.

Le constituant ou chaque constituant de la ou des solutions réinjectées peut être, avant réinjection, purifié indépendamment par tout moyen de purification habituellement utilisé pour purifier les constituants, par exemple par adsorption, extraction liquide/liquide, extraction gaz/liquide ou distillation.

En particulier, le solvant et/ou le ou les monomères peuvent être purifiés indépendamment par adsorption, extraction liquide/liquide, extraction gaz/liquide ou distillation.

L'adsorption peut se faire sur zhéolithe ou sur alumine. L'extraction liquide/liquide peut se faire au moyen de la soude.

L'extraction gaz/liquide peut se faire au moyen d'un flux d'air ou d'azote.

La distillation peut être une distillation mono-étagée sans reflux (ou flash) ou une distillation sur colonne éventuellement sous vide.

Le flash est effectué au moyen d'un compartiment d'évaporation. La distillation sur colonne est effectuée au moyen d'une colonne de distillation.

Quel que soit le procédé de purification choisi pour chaque constituant, la phase purifiée est utilisée pour constituer le flux à réinjecter.

Selon un mode de réalisation les résidus du ou des procédés de purification du ou de chaque constituant sont réinjectés dans la solutiond'entrée alimentant le premier réacteur. Ces résidus sont constitués des monomères et/ou du solvant avec une forte concentration en impuretés. Les résidus peuvent alors soit constituer un appoint en monomère et/ou en solvant à la solution d'entrée, soit constituer la source unique en monomère et/ou en solvant de la solution d'entrée. Ce mode de réalisation permet de limiter la perte de matière dans le cas de réinjection.

Par élastomère diénique, doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non). Plus particulièrement, par élastomère diénique, on entend tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs monomères vinylaromatiques ayant de 8 à 20 atomes de carbone. Dans le cas de copolymères, ceux-ci contiennent de 20 % à 99 % en poids d'unités diéniques, et de 1 à 80 % en poids d'unités vinylaromatiques.

A titre de diènes conjugués utilisables dans le procédé conforme à l'invention conviennent notamment le

butadiène-1,3, le 2-méthyl-1,3-butadiène, les 2,3 di(alcoyle en Ci à Cs)-1,3-butadiène tels que par exemple le 2,3-diméthyl-1,3-butadiène, 2,3-diéthyl-1,3-butadiène, 2-méthyl-3-éthyl-1,3-butadiène, le 2-méthyl-3-isopropyl-1,3-butadiène, le phényl-1,3-butadiène, le 1,3-pentadiène et le 2,4 hexadiène, etc.

A titre de monomères vinylaromatiques conviennent notamment le styrène, l'ortho-, méta, para-méthylstyrène, le mélange commercial "vinyltoluène", le para-tertiobutylstyrène, les méthoxystyrènes, le vinylmésitylène, le divinylbenzène et le vinylnaphtalène, etc.

L'élastomère diénique est choisi préférentiellement dans le groupe des élastomères diéniques fortement insaturés constitué par les polybutadiènes (BR), les polyisoprènes (IR) de synthèse, les copolymères de butadiène, en particulier les copolymères de butadiène et d'un monomère vinyl aromatique, les copolymères d'isoprène et les mélanges de ces élastomères. De tels copolymères sont plus particulièrement des copolymères de butadiène-styrène (SBR), des copolymères d'isoprène-butadiène (BIR), des copolymères d'isoprène-styrène (SIR) et des copolymères d'isoprène-butadiène-styrène (SBIR). Parmi ces copolymères, les copolymères de butadiène-styrène (SBR) sont particulièrement préférés.

L'élastomère diénique est généralement préparé par polymérisation anionique en présence d'un initiateur de polymérisation. L'initiateur de polymérisation est compris dans la solution d'entrée.

En tant qu'initiateur de polymérisation, on peut utiliser tout initiateur anionique monofonctionnel connu. Toutefois un initiateur contenant un métal alcalin tel que le lithium est utilisé à titre préférentiel. Comme initiateurs organolithiens conviennent notamment ceux comportant une liaison carbone-lithium. Des composés représentatifs sont les organolithiens aliphatiques tels que l'éthyllithium, le n-butyllithium (n-BuLi), l'isobutyllithium, etc...

La polymérisation est effectuée en présence d'un solvant compris dans la solution d'entrée.

Le solvant utilisé dans le procédé selon l'invention est de préférence un solvant hydrocarboné inerte qui peut être par exemple un hydrocarbure aliphatique ou alicyclique comme le pentane, l'hexane, l'heptane, l'iso-octane, le cyclohexane, le méthylcyclohexane ou un hydrocarbure aromatique comme le benzène, le toluène, le xylène.

Comme expliqué précédemment, la solution d'entrée, ainsi qu'éventuellement l'une ou plusieurs des solutions réinjectées, utilisée(s) dans le procédé selon l'invention comprend/comprennent un agent polaire.

À titre d'agents polaires chélatants utilisables dans le procédé conforme à l'invention conviennent notamment les agents comprenant au moins une fonction amine tertiaire ou au moins une fonction éther et préférentiellement des agents de type tétrahydrofurfuryle éthyle éther ou tétraméthyle éthylènediamine.

Selon un premier mode de réalisation particulier, le flux en sortie du réacteur n et contenant les chaînes vivantes est mis en contact avec un ou plusieurs agents de stoppage de la polymérisation comme connu en soi, injecté(s) dans le procédé de manière continue.

Dans ce premier mode de réalisation, l'élastomère diénique vivant compris dans le flux en sortie du réacteur n peut être mis à réagir avec en outre un ou plusieurs agents de fonctionnalisation, de couplage ou d'étoilage, qui peuvent agir comme agent de stoppage complémentaire de la polymérisation. La particularité de ces agents complémentaires est qu'ils peuvent soit interagir avec une charge renforçante (c'est le cas d'agents de fonctionnalisation, de couplage et de certains agents d'étoilage) soit conférer au polymère une structure donnée (c'est le cas de certains agents d'étoilage et de couplage).

Selon un second mode de réalisation particulier, l'élastomère diénique vivant compris dans le flux en sortie du réacteur n est mis à réagir avec un ou plusieurs agents de fonctionnalisation, de couplage ou d'étoilage. Ces agents agissent alors également comme agent de stoppage.

Quel que soit le mode de réalisation, comme agent de fonctionnalisation, de couplage ou d'étoilage on peut envisager tout agent connu en soi.

Les caractéristiques précitées de la présente invention, ainsi que d'autres, seront mieux comprises à la lecture de la description suivante de plusieurs exemples de réalisation de l'invention, donnés à titre illustratif et non limitatif.

## Mesures et tests utilisés

### Température de transition vitreuse

Dans ces exemples, les températures de transition vitreuse (Tg) des élastomères sont déterminées à l'aide d'un calorimètre différentiel ("differential scanning calorimeter").

### Indice de polymolécularité

L'indice de polymolécularité du polymère est déterminé à l'aide d'une SEC(chromatographie d'exclusion stérique).

La technique SEC (« Size Exclusion Chromatography ») permet de séparer les macromolécules en solution suivant leur taille à travers des colonnes remplies d'un gel poreux. Les macromolécules sont séparées suivant leur

volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE.

Il n'y a pas de traitement particulier de l'échantillon de polymère avant analyse. Celui-ci est simplement solubilisé dans le solvant d'élution à une concentration d'environ 1 g.L-1. Puis la solution est filtrée sur filtre de porosité 0,45μm avant injection.

L'appareillage utilisé est une chaîne chromatographique "WATERS alliance". Le solvant d'élution est soit le tétrahydrofurane, soit le tétrahydrofurane + 1%vol. de diisopropylamine + 1%vol. de triéthylamine, le débit de 1 mL.min-1, la température du système de 35° C et la durée d'analyse de 30 min. Un jeu de deux colonnes WATERS de dénomination commerciale "STYRAGEL HT6E" est utilisé. Le volume injecté de la solution de l'échantillon de polymère est 100 μL. Le détecteur est un réfractomètre différentiel "WATERS 2410" et le logiciel d'exploitation des données chromatographiques est le système "WATERS EMPOWER".

Les masses molaires moyennes calculées sont relatives à une courbe d'étalonnage réalisée pour des SBR de microstructure suivante : 25% massique de motifs type styrène, 23% massique de motifs type 1-2 et 50% massique de motifs type 1-4 trans.

Conversion

Les conversions sont mesurées par pesées d'extrait sec de la solution contenant le polymère. Dans cette méthode, de la solution contenant le polymère est prélevée à la sortie du réacteur. Cette solution est introduite dans une barquette préalablement tarée. La masse de solution est ainsi pesée.

L'échantillon est séché à 140°C, sous la pression réduite de 200 mmHg pendant 15 minutes. La barquette est ensuite placée dans un dessiccateur contenant du gel de silice pendant 2 minutes. La pesée de la barquette permet alors de déterminer la masse de polymère de l'échantillon prélevé. On remonte alors via la concentration en monomères à la conversion à la sortie du réacteur.

$$C = \frac{\frac{m_{extrait\ sec}}{m_{échantillon}}}{\frac{\sum_1^n Mi}{\sum_1^n Qi}} . 100$$

avec

$$\sum_1^n Mi$$

qui représente la somme de toutes les entrées massiques en monomères dans le procédé total (réacteurs 1 à n) et

$$\sum_1^n Qi$$

qui représente la somme de toutes les entrées massiques dans le procédé total (réacteurs 1 à n). *(Solvant, monomères, catalyseurs etc...),* le rapport $\frac{\sum_1^n Mi}{\sum_1^n Qi}$ correspondant au % massique en monomères

Microstructure des élastomères

La microstructure des élastomères est caractérisée par la technique de spectroscopie proche infrarouge (NIR).

La spectroscopie proche infrarouge (NIR) est utilisée pour déterminer quantitativement le taux massique de styrène dans l'élastomère ainsi que sa microstructure (répartition relative des unités butadiène 1,2, 1,4-trans et 1,4 cis). Le principe de la méthode repose sur la loi de Beer-Lambert généralisée à un système multicomposants. La méthode étant indirecte, elle fait appel à un étalonnage multivarié [Vilmin, F.; Dussap, C.; Coste, N. Applied Spectroscopy 2006, 60, 619-29] réalisé à l'aide d'élastomères étalons de composition déterminée par RMN 13C. Le taux de styrène et la microstructure sont alors calculés à partir du spectre NIR d'un film d'élastomère d'environ 730 μm d'épaisseur. L'acquisition du spectre est réalisée en mode transmission entre 4000 et 6200 cm-1 avec une résolution de 2 cm-1, à l'aide d'un spectromètre proche infrarouge à transformée de Fourier Bruker Tensor 37 équipé d'un détecteur InGaAs refroidi par effet Peltier.

Taux de chaînes vivantes dans l'élastomère en sortie des réacteurs

Dans les exemples, la solution de polymère vivante en sortie des réacteurs de polymérisation est mise en contact de manière continue avec l'agent de fonctionnalisation DEAB (diéthylaminobenzophénone) en excès avec un temps de contact suffisant à la réaction totale de toutes les chaînes vivantes avec l'agent de fonctionnalisation. La détermination du taux de DEAB greffée (taux de fonction dans les exemples) est réalisée par une analyse RMN. Cette détermination est réalisée par rapport à la quantité d'élastomère. De cette manière les résultats obtenus peuvent être exprimés en % molaire, en meq/kg d'élastomère ou en pce (pour cent grammes d'élastomère)

Les échantillons (environ 25mg d'élastomère) sont solubilisés dans le Disulfure de Carbone (CS2) environ 1mL. 100μL de cyclohexane deutéré sont ajoutés pour le signal de Lock.

Les spectres sont acquis sur un spectromètre Avance 500 MHz Bruker équipé d'une sonde " large bande " BBI z-grad 5 mm Bruker.

L'expérience RMN 1H quantitative utilise une séquence simple impulsion 30° et un délai de répétition de 5 secondes entre chaque acquisition. 256 accumulations sont réalisées à température ambiante.

Les signaux RMN 1H des 8 protons quantifiés (protons liés aux carbones identifiés 1 à 4 sur la figure 1) de la DEAB greffées correspondent à un massif au déplacement chimique de 3.2ppm.

Le spectre de corrélation RMN 2D 1H/13C 1J HSQC édité permet de vérifier la nature du motif greffé grâce aux déplacements chimiques des atomes de carbone et de protons. Le signal des carbones 1 à 4 a un déplacement chimique à 44.4ppm.

Le spectre RMN 1H permet de quantifier les motifs DEAB greffés par intégration des massifs de signaux décrits ci-dessus : H1, H2 pour la forme DEAB déshydratée et H3, H4 pour la forme DEAB carbinol.

La diéthylaminobenzophénone greffée, formes déshydratée et carbinol, est de formule suivante :

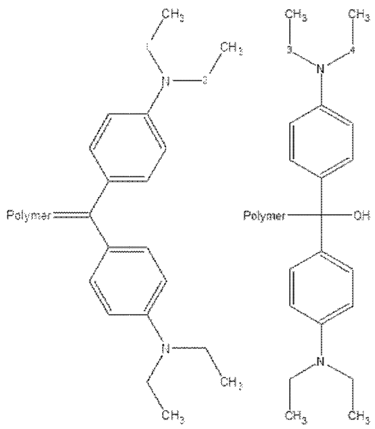

Les déplacements chimiques sont calibrés par rapport à l'impureté protonée du Disulfure de Carbone δppm 1H à 7.18 ppm référencé sur le TMS (δppm 1H à 0ppm) et δppm 13C à 192ppm référencé sur le TMS (δppm 13C à 0ppm).

Le spectre RMN 1D 1H simple impulsion permet de quantifier les motifs du polymère par intégration des massifs de signaux caractéristiques. Par exemple pour un SBR (Styrène butadiène rubber), les massifs considérés pour le calcul sont 5H (protons) styrène entre 7.4ppm et 6.0ppm, 2H PB (polybutadiène) 1-4 + 1H PB1-2 entre 5.8ppm et 4.9ppm et 2H PB1-2 entre 4.9ppm et 4.3ppm.

Ainsi en fonction du taux de chaînes vivantes en sortie des réacteurs de polymérisation, il est possible de déterminer par différence le taux de chaînes mortes dans l'élastomère.

Exemples

Dans une installation pilote de polymérisation continue contenant plusieurs réacteurs continus agités, supposés parfaitement agités selon l'homme l'art, sont introduits en continu du méthylcyclohexane, du butadiène, du styrène et du tétrahydrofurfuryl éthyle éther selon les proportions décrites dans chaque exemple. Du n-butyllithium est introduit en quantité suffisante afin de neutraliser les impuretés protiques apportées par les différents constituants présents dans l'entrée de ligne. Les prélèvements des échantillons pour la caractérisation sont effectués après stabilisation du procédé. Par stabilité on considère une durée qui est la somme de 3 temps de séjour par réacteur de polymérisation. Par exemple pour 3 réacteurs i en série :

$$T_{Stab} = 3.\sum_{i=1}^{3} Tds_i$$

Pour les exemples 1 à 3, une épuration de la solution réinjectée de butadiène et/ou de solvant est réalisée en continu au moyen d'une colonne d'alumines. Cette colonne est garnie d'un lit fixe d'alumines de type Axsorb 920.
Le rapport L/D du lit fixe minimum est de 4.
Le rapport Diamètre colonne/diamètre moyen des particules alumine minimum est de 10.
Le Reynolds en fût vide est supérieur à 2.
Le temps de séjour minimum du fluide dans le lit fixe garni est de 5 minutes.
La colonne est maintenue dans des conditions suivantes :

- Température = 10°C
- Pression = 5 bar.

Les temps de séjour et les concentrations indiqués en exemple sont calculés à partir des débits des différents constituants entrant dans le procédé de polymérisation.

Exemple 1

Une synthèse de polymère butadiène/styrène est effectuée selon un procédé comparatif utilisant 9 réacteurs agités, supposés parfaitement agités en série.
Le butadiène réinjecté est épuré par colonne d'alumine.
Les conditions opératoires sont précisées dans le tableau 1.

Tableau 1

| **Conditions opératoires** | **Valeur** | **Unité** | **Réacteur** |
|---|---|---|---|
| Nombre réacteurs | 9 | - | - |
| Volume des réacteurs | 1,83 | L | 1 |
| | 2,411 | | 2 |
| | 2,411 | | 3 |
| | 2,411 | | 4 |
| | 2,411 | | 5 |
| | 2,411 | | 6 |
| | 4,441 | | 7 |
| | 4,441 | | 8 |
| | 4,441 | | 9 |
| %Styrène (1) | 45 | % | - |
| %massique monomères (2) | 12,5 | % | - |
| Agent polaire (tétrahydrofurf uryl éthyle éther) | $8{,}2.10^{-7}$ | Mol/ $m^3$ | 1 |

(suite)

| Conditions opératoires | Valeur | Unité | Réacteur |
|---|---|---|---|
| Initiateur actif (n-butyllithium) | $5,1.10^{-7}$ | Mol/ $m^3$ | 1 |
| Temps de séjour | 6,53 | Min | 9 |
| Température | 60 | °C | 1,2,3,4,5,6,7,8,9 |
| Réinjection butadiène (3) | 8 | % | 7 |
| Conversion massique globale (4) | 8 | % | 1 |
| | 27,8 | % | 3 |
| | 46,7 | % | 6 |
| | 69,3 | % | 9 |

(1) en poids par rapport à la somme de toutes les entrées massiques en monomères du procédé
(2) en poids par rapport à la somme de toutes les entrées massiques du procédé
(3) en poids par rapport au poids total des monomères injectés dans l'ensemble des réacteurs(4) conversion massique globale dans le réacteur

Les caractéristiques du polymère obtenu en sortie du réacteur 9 sont données dans le tableau 2.

Tableau 2

| | | |
|---|---|---|
| Taux vinyl (5) | 23,4 | % |
| Taux styrène (6) | 28,8 | % |
| Tg | -46,2 | °C |
| Ip | 1,24 | - |
| Mn | 126,1 | kg/mol |
| Quantité de fonctions | 7,41 | mmol/kg |
| Taux polymère vivant (7) | 96,9 | % |

(5) en poids du poids total des motifs butadiène introduits dans l'ensemble des réacteurs
(6) en poids du poids total de l'ensemble des monomères introduits dans l'ensemble des réacteurs
(7) Rapport molaire entre la quantité de fonctions déterminée par RMN et la quantité d'initiateur actif introduit.

Exemple 2

Une synthèse de polymère styrène/butadiène est effectuée selon un procédé selon l'invention utilisant 6 réacteurs agités, supposés parfaitement agités en série.

Le butadiène réinjecté est épuré par colonne d'alumine. Les conditions opératoires sont précisées dans le tableau 3.

Tableau 3

| Conditions opératoires | Valeur | Unité | Réacteur |
|---|---|---|---|
| Nombre réacteurs | 6 | - | - |

(suite)

| Conditions opératoires | Valeur | Unité | Réacteur |
|---|---|---|---|
| Volume des réacteurs | 2,411 | L | 1 |
| | 2,411 | | 2 |
| | 2,411 | | 3 |
| | 4,441 | | 4 |
| | 4,441 | | 5 |
| | 4,441 | | 6 |
| %Styrène (1) | 45 | % | |
| %massique monomères (2) | 12,5 | % | - |
| Agent polaire (tétrahydrofurfuryl éthyle éther) | $8{,}2.10^{-7}$ | $Mol/m^3$ | 1 |
| Initiateur actif (n-butyllithium) | $5{,}1.10^{-7}$ | $Mol/m^3$ | 1 |
| Temps de séjour | 9,49 | Min | 6 |
| Température | 55 | °C | 1 |
| | 55 | | 2 |
| | 55 | | 3 |
| | 65 | | 4 |
| | 65 | | 5 |
| | 65 | | 6 |
| Réinjection butadiène (3) | 8 | % | 4 |
| Conversion massique globale (4) | 9,8 | % | 1 |
| | 33,4 | % | 3 |
| | 64,8 | % | 6 |

(1) en poids par rapport à la somme de toutes les entrées massiques en monomères du procédé
(2) en poids par rapport à la somme de toutes les entrées massiques du procédé
(3) en poids par rapport au poids total des monomères injectés dans l'ensemble des réacteurs
(4) conversion massique globale dans le réacteur

Les caractéristiques du polymère obtenu en sortie du réacteur 6 sont données dans le tableau 4.

Tableau 4

| | | |
|---|---|---|
| Taux vinyl (5) | 23,5 | % |
| Taux styrène (6) | 29,1 | % |
| Tg | -45,7 | °C |
| Mn | 122,2 | kg/mol |
| IP | 1,27 | - |
| Taux fonction | 7,89 | mmol/kg |
| Taux polymère vivant (7) | 95,4 | % |

(5) en poids du poids total des motifs butadiène introduits dans l'ensemble des réacteurs(6) en poids du poids total de l'ensemble des monomères introduits dans l'ensemble des réacteurs
(7) Rapport molaire entre la quantité de fonctions déterminée par RMN et la quantité d'initiateur actif introduit.

Ainsi, cet exemple montre qu'il est possible de synthétiser un polymère fonctionnel d'indice de polymolécularité réduit à partir d'un procédé polytherme à 6 réacteurs en série.

Ainsi, cet exemple montre qu'il est possible de synthétiser à partir d'un procédé polytherme à 6 réacteurs en série, un polymère fonctionnel d'indice de polymolécularité réduit équivalent à celui obtenu par la synthèse à 9 réacteurs de l'exemple 1, pourtant a priori plus efficace pour réduire l'Ip du fait du nombre de réacteurs plus élevé.

La rampe de température permet de maintenir un indice de polymolécularité réduit en diminuant le nombre de réacteurs. Ceci a un fort impact sur le coût du procédé et donc sur l'aspect économique de son industrialisation.

Exemple 3

L'objet de cet exemple est de comparer deux synthèses d'un polymère butadiène/styrène fonctionnalisé effectuées au moyen de deux réacteurs agités, supposés parfaitement agités de polymérisation en série et d'un réacteur de fonctionnalisation.

Lors de la première synthèse de polymère fonctionnalisé, la polymérisation ne comprend pas de réinjection de monomère dans le second réacteur.

La seconde synthèse de polymère fonctionnalisé est effectuée avec réinjection de monomères selon un procédé selon l'invention. Le solvant et le butadiène réinjectés dans le deuxième réacteur lors de la polymérisation, sont épurés sur colonnes d'alumine.

Les conditions opératoires sont précisées dans le tableau 5.

Tableau 5

| **Conditions opératoires** | **Valeur synthèse 1** | **Valeur synthèse 2** | **Unité** | **Réacteur** |
|---|---|---|---|---|
| Nombre réacteurs | 2 | 2 | - | - |
| Volume des réacteurs | 14 | 14 | L | 1 |
| | 14 | 14 | | 2 |
| %styrène (1) | 40 | 40 | % | - |
| %massique monomères (2) | 13 | 13 | % | 1 |
| Agent polaire (tétrahydrofurfuryl éthyle éther) | $5{,}8.10^{-7}$ | $5{,}8.10^{-7}$ | $Mol/m^3$ | 2 |
| Initiateur actif (n-butyllithium) | $8{,}5.10^{-7}$ | $8{,}5.10^{-7}$ | $Mol/m^3$ | 2 |
| Temps de séjour | 30 | 30 | Min | 2 |
| Température | 50 | 50 | °C | 1 |
| Température | 60 | 60 | °C | 2 |
| Réinjection solvant (3) | 0 | 10 | % | 2 |
| Réinjection butadiène (4) | 0 | 50 | % | 2 |
| Conversion massique monomères (5) | 76,2 | 56,4 | % | 1 |
| | 96,3 | 93,3 | % | 2 |
| (1) en poids par rapport à la somme de toutes les entrées massiques en monomères du procédé<br>(2) en poids par rapport à la somme de toutes les entrées massiques du procédé<br>(3) En poids par rapport à la somme de toutes les entrées de solvant du procédé.<br>(4) en poids par rapport au poids total des monomères injectés dans l'ensemble des réacteurs<br>(5) conversion massique globale dans le réacteur | | | | |

Les caractéristiques des polymères obtenus en sortie du réacteur 2 sont données dans le tableau 6.

Tableau 6

| | Synthèse 1 | Synthèse 2 | Unité |
|---|---|---|---|
| Taux vinyl (6) | 49,3 | 48,8 | % |
| Taux styrène (7) | 39,1 | 39,8 | % |

(suite)

| | Synthèse 1 | Synthèse 2 | Unité |
|---|---|---|---|
| Tg | -14,4 | -13,9 | °C |
| Mn | 111,5 | 112,2 | kg/mol |
| IP | 1,67 | 1,52 | - |
| Taux fonction | 8,95 | 8,81 | mmol/kg |
| Taux polymère vivant (8) | 97,3 | 95,7 | % |
| (6) en poids du poids total des motifs butadiène introduits dans l'ensemble des réacteurs<br>(7) en poids du poids total de l'ensemble des monomères introduits dans l'ensemble des réacteurs<br>(8) Rapport molaire entre la quantité de fonctions dosées par RMN et la quantité d'initiateur actif introduit. | | | |

Le la synthèse 2 selon l'invention présente des conversions équilibrées entre le réacteur 1 et 2.

De cette façon, le polymère fonctionnalisé synthétisé au moyen de la synthèse 2 avec réinjection de monomères possède un Ip plus bas que celui de la synthèse 1 effectuée sans réinjection de monomères.

Exemple 4

L'objet de cet exemple est de quantifier l'impact de l'épuration de butadiène sur le taux de polymère vivant en sortie de polymérisation.

La première synthèse comporte une réinjection de butadiène non épuré lors de la polymérisation. Le butadiène non épuré contient en impureté majoritaire du terbutylcathéchol (TBC) à hauteur de 300 ppm.

La deuxième synthèse comporte, lors de la polymérisation, une réinjection de butadiène épuré par flash dans les conditions de température et pression suivantes :

P =1,1 bar
T = 50°C

Le solvant réinjecté dans les deux synthèses est épuré par colonne d'alumines comme décrit plus haut pour les exemples 1 à 3. Les conditions opératoires sont précisées dans le tableau 7.

Tableau 7

| **Conditions opératoires** | **Valeur synthèse 1** | **Valeur synthèse 2** | **Unité** | **Réacteur** |
|---|---|---|---|---|
| Nombre réacteurs | 2 | 2 | - | - |
| Volume des réacteurs | 32,5 | 32,5 | L | 1 |
| | 32,5 | 32,5 | | 2 |
| %styrène (1) | 35 | 35 | % | - |
| %massique monomères (2) | 13 | 13 | % | 1 |
| Agent polaire (tétrahydrofurfuryl éthyle éther) | $1,9.10^{-7}$ | $1,9.10^{-7}$ | $Mol/m^3$ | 2 |
| Initiateur actif (n-butyllithium) | $7,6.10^{-7}$ | $7,6.10^{-7}$ | $Mol/m^3$ | 2 |
| Temps de séjour | 30 | 30 | Min | 2 |
| Température | 40 | 40 | °C | 1 |
| Température | 70 | 70 | °C | 2 |
| Réinjection solvant (3) | 10 | 10 | % | 2 |
| Réinjection butadiène (4) | 19,5 | 19,5 | % | 2 |

(suite)

| Conditions opératoires | Valeur synthèse 1 | Valeur synthèse 2 | Unité | Réacteur |
|---|---|---|---|---|
| Conversion massique monomères (5) | 38,5 | 38,0 | % | 1 |
| | 85,9 | 86,1 | % | 2 |

(1) en poids par rapport à la somme de toutes les entrées massiques en monomères du procédé
(2) en poids par rapport à la somme de toutes les entrées massiques du procédé
(3) En poids par rapport à la somme de toutes les entrées de solvant du procédé.
(4) en poids par rapport au poids total des monomères injectés dans l'ensemble des réacteurs
(5) conversion massique globale dans le réacteur

Les caractéristiques des polymères obtenus en sortie du réacteur 2 sont données dans le tableau 8.

Tableau 8

| | Synthèse 1 | Synthèse 2 | Unité |
|---|---|---|---|
| Taux vinyl (6) | 36,8 | 37,0 | % |
| Taux styrène (7) | 29,2 | 29,8 | % |
| Tg | -36,8 | -35,8 | °C |
| Mn | 110,5 | 110,2 | kg/mol |
| IP | 1,51 | 1,51 | - |
| Taux fonction | 8,05 | 8,81 | mmol/kg |
| Taux polymère vivant (8) | 90,1 | 98,8 | % |

(6) en poids du poids total des motifs butadiène introduits dans l'ensemble des réacteurs
(7) en poids du poids total de l'ensemble des monomères introduits dans l'ensemble des réacteurs
(8) Rapport molaire entre la quantité de fonctions déterminée par RMN et quantité d'initiateur actif introduit.

Nous pouvons donc voir que l'épuration du butadiène a un impact fort sur le taux de polymère vivant mesuré par la méthode décrite précédemment.

## Revendications

1. Procédé de synthèse en continu d'un élastomère diénique au moyen de n réacteurs r1 à rn, équipés d'un système d'agitation interne, supposés parfaitement agités, disposés en série, n variant de 2 à 15, de préférence de 2 à 9, le réacteur r1 étant alimenté par une solution d'entrée comprenant un solvant, un ou plusieurs monomères, un initiateur de polymérisation anionique et un agent polaire, un ou plusieurs des réacteur(s) r2 à rn étant en outre alimenté(s) par réinjection d'une solution purifiée comprenant du solvant et/ou du ou des monomères, la pureté de la ou de chaque solution réinjectée étant telle que la proportion du nombre de chaînes mortes dans le flux en sortie du réacteur rn est inférieure à 30%, de préférence inférieure à 10 %, du nombre de chaînes vivantes initiées dans le réacteur r1, la température de chaque réacteur variant de 20 à 150°C, de préférence variant de 30 à 120°C et étant supérieure ou égale à la température du réacteur qui le précède immédiatement, la température du réacteur rn étant supérieure à la température du réacteur r1,

   la quantité massique $M_1$ de monomère(s) introduit(s) dans le réacteur r1 étant telle que

$$0,1 < \frac{M1}{\sum_{i=1}^{n} Mi} \leq 1$$

   la quantité massique $M_{i'}$ de monomère(s) réinjecté(s) dans le réacteur ri', lorsque $M_i \neq 0$, i' variant de 2 à n, étant telle que

$$0 \leq \frac{Mi'}{\sum_1^n Mi} < 0{,}9$$

et telle que Mi' représente de 5 à 100% en masse de la masse de la solution réinjectée dans le réacteur ri', lorsque $M_{i'} \neq 0$,
où Mi est la quantité massique de monomère(s) introduit(s) dans le réacteur ri, i variant de 1 à n,
la quantité massique de l'ensemble des monomères rentrant dans les réacteurs r1 à rn représentant 5 à 25% en masse de la somme des entrées massiques totales des réacteurs r1 à rn,
la conversion massique globale Ci" dans chaque réacteur ri" étant telle que

$$\frac{Cn}{n} - 0{,}2 < \frac{Ci''}{i''} < \frac{Cn}{n} + 0{,}2$$

où

$$Ci'' = \frac{Pi''}{\sum_1^n Mi}$$

où Pi" est la masse de polymère formé à la sortie du réacteur ri", i" variant de 1 à n-1,
Cn est la conversion massique globale dans le réacteur rn, avec

$$Cn = \frac{Pn}{\sum_1^n Mi}$$

où Pn est la masse de polymère formé à la sortie du réacteur rn, l'élastomère diénique obtenu présentant un indice de polymolécularité variant de 1,1 à 2, de préférence compris entre 1,1 et 1,7, plus préférentiellement variant de 1,2 à 1,6.

**2.** Procédé selon la revendication 1, **caractérisé en ce que** n varie de 2 à 3, de préférence n=2.

**3.** Procédé selon l'une quelconque des revendications précédentes, **caractérisé en ce que** l'une ou plusieurs des solutions réinjectées contien(nen)t un agent polaire.

**4.** Procédé selon l'une quelconque des revendications précédentes **caractérisé en ce que** le ou chaque constituant de la ou des solutions réinjectées est, avant réinjection, purifié indépendamment par adsorption, extraction liquide/liquide, extraction gaz/liquide ou distillation.

**5.** Procédé selon la revendication 4 **caractérisé en ce que** la distillation est une distillation mono-étagée sans reflux ou une distillation sur colonne.

**6.** Procédé selon l'une quelconque des revendications 4 à 5, **caractérisé en ce que** les résidus du ou des procédés d'épuration du ou de chaque constituant sont réinjectés dans la solution d'entrée alimentant le premier réacteur.

**7.** Procédé selon la revendication 6 **caractérisé en ce que** les résidus du ou des procédés d'épuration du ou de chaque constituant constituent un appoint en monomère et/ou en solvant à la solution d'entrée.

**8.** Procédé selon la revendication 6 **caractérisé en ce que** les résidus du ou des procédés d'épuration du ou de chaque constituent la source unique en monomère et/ou en solvant de la solution d'entrée.

**9.** Procédé selon l'une quelconque des revendications précédentes **caractérisé en ce que** le temps de séjour dans le réacteur ri, i variant de 1 à n, est compris entre 1 et 60 minutes, de préférence entre 5 et 60 minutes, de préférence

encore entre 10 et 50 minutes.

**10.** Procédé selon l'une quelconque des revendications précédentes **caractérisé en ce que** l'élastomère diénique est un copolymère de butadiène et d'un monomère vinylaromatique, notamment un SBR.

**11.** Procédé selon l'une quelconque des revendications précédentes **caractérisé en ce que** l'initiateur de polymérisation est choisi parmi l'éthyllithium, le n-butyllithium, l'isobutyllithium.

**12.** Procédé selon l'une quelconque des revendications précédentes, **caractérisé en ce que** le flux en sortie du réacteur rn et contenant les chaînes vivantes est mis en contact avec un ou plusieurs agent de stoppage de polymérisation injecté(s) de manière continue dans le procédé.

**13.** Procédé selon l'une quelconque des revendications 1 à 11 **caractérisé en ce que** l'élastomère diénique vivant compris dans le flux en sortie du réacteur n est mis à réagir avec un ou plusieurs agents de stoppage de polymérisation et un ou plusieurs agents de fonctionnalisation, de couplage ou d'étoilage.

**14.** Procédé selon l'une quelconque des revendications 1 à 11 **caractérisé en ce que** l'élastomère diénique vivant compris dans le flux en sortie du réacteur n est mis à réagir avec un ou plusieurs agent de fonctionnalisation, de couplage ou d'étoilage.

## Patentansprüche

**1.** Verfahren zur kontinuierlichen Synthese eines Dienelastomers mit Hilfe von n Reaktoren r1 bis rn, die mit einem internen Rührsystem ausgestattet sind, als perfekt gerührt angenommen werden und in Reihe angeordnet sind, wobei n von 2 bis 15, vorzugsweise 2 bis 9 variiert, wobei der Reaktor r1 mit einer Eingangslösung, die ein Lösungsmittel, ein oder mehrere Monomere, einen anionischen Polymerisationsinitiator und ein polares Mittel umfasst, gespeist wird, wobei einer oder mehrere der Reaktoren r2 bis rn außerdem durch Wiedereinleiten einer gereinigten Lösung, die Lösungsmittel und/oder Monomer oder Monomere umfasst, gespeist wird, wobei die Reinheit der oder jeder wieder eingeleiteten Lösung derart ist, dass der Anteil der Zahl toter Ketten in dem Ausgangsstrom des Reaktors rn weniger als 30 %, vorzugsweise weniger als 10 %, der Zahl der im Reaktor r1 initiierten lebenden Ketten beträgt, wobei die Temperatur jedes Reaktors von 20 bis 150 °C, vorzugsweise von 30 bis 120 °C, variiert und größer oder gleich der Temperatur des unmittelbar vorhergehenden Reaktors ist, wobei die Temperatur des Reaktors rn größer als die Temperatur des Reaktors r1 ist,

wobei die Massenmenge $M_i$ des bzw. der in den Reaktor r1 eingetragenen Monomere derart ist, dass

$$0,1< \frac{M1}{\sum_{i=1}^{n} Mi} \leq 1$$

wobei die Massenmenge $M_i$ des bzw. der wieder in den Reaktor ri' eingeleiteten Monomere dann, wenn $M_{i'}\neq 0$, wobei i' von 2 bis n variiert, derart ist, dass

$$0 \leq \frac{Mi'}{\sum_{1}^{n} Mi} <0,9$$

und derart, dass Mi' dann, wenn $M_{i'}\neq 0$, 5 bis 100 Massen-% der Masse der wieder in den Reaktor ri' eingeleiteten Lösung ausmacht,
wobei Mi die Massenmenge des bzw. der in den Reaktor ri eingetragenen Monomere ist, wobei i von 1 bis n variiert, wobei die Massenmenge aller in die Reaktoren r1 bis rn eintretenden Monomere 5 bis 25 Massen-% der Summe der gesamten Masseneinträge der Reaktoren r1 bis rn ausmacht, wobei die Gesamtmassenumwandlung Ci" in jedem Reaktor ri" derart ist, dass

$$\frac{Cn}{n} - 0{,}2 < \frac{Ci''}{i''} < \frac{Cn}{n} + 0{,}2$$

wobei

$$Ci'' = \frac{Pi''}{\sum_1^n Mi}$$

wobei Pi" die Masse des am Ausgang des Reaktors ri" gebildeten Polymers ist, wobei i" im Bereich von 1 bis n-1 variiert,
Cn die Gesamtmassenumwandlung in dem Reaktor rn ist, wobei

$$Cn = \frac{Pn}{\sum_1^n Mi}$$

wobei Pn die Masse des am Ausgang des Reaktors rn gebildeten Polymers ist, wobei das erhaltene Dienelastomer einen Polymolekularitätsindex variierend von 1,1 bis 2, vorzugsweise zwischen 1,1 und 1,7, weiter bevorzugt variierend von 1,2 bis 1,6, aufweist.

2. Verfahren nach Anspruch 1, **dadurch gekennzeichnet, dass** n von 2 bis 3 variiert, vorzugsweise n=2.

3. Verfahren nach einem der vorhergehenden Ansprüche, **dadurch gekennzeichnet, dass** eine oder mehrere der wieder eingeleiteten Lösungen ein polares Mittel enthalten.

4. Verfahren nach einem der vorhergehenden Ansprüche, **dadurch gekennzeichnet, dass** der oder jeder Bestandteil der wieder eingeleiteten Lösung(en) vor dem Wiedereinleiten unabhängig durch Adsorption, Flüssig/Flüssig-Extraktion, Gas/Flüssig-Extraktion oder Destillation gereinigt wird.

5. Verfahren nach Anspruch 4, **dadurch gekennzeichnet, dass** es sich bei der Destillation um eine einstufige Destillation ohne Rücklauf oder eine Kolonnendestillation handelt.

6. Verfahren nach einem der Ansprüche 4 bis 5, **dadurch gekennzeichnet, dass** die Rückstände des bzw. der Reinigungsverfahren des oder jedes Bestandteils wieder in die den ersten Reaktor speisende Eingangslösung eingeleitet werden.

7. Verfahren nach Anspruch 6, **dadurch gekennzeichnet, dass** die Rückstände des bzw. der Reinigungsverfahren des oder jedes Bestandteils einen zusätzlichen Monomer- und/oder Lösungsmittelbeitrag zur Eingangslösung bilden.

8. Verfahren nach Anspruch 6, **dadurch gekennzeichnet, dass** die Rückstände des bzw. der Reinigungsverfahren des oder jedes Bestandteils die einzige Monomer- und/oder Lösungsmittelquelle der Eingangslösung bilden.

9. Verfahren nach einem der vorhergehenden Ansprüche, **dadurch gekennzeichnet, dass** die Verweilzeit im Reaktor ri, wobei i von 1 bis n variiert, zwischen 1 und 60 Minuten, vorzugsweise zwischen 5 und 60 Minuten, noch weiter bevorzugt zwischen 10 und 50 Minuten, liegt.

10. Verfahren nach einem der vorhergehenden Ansprüche, **dadurch gekennzeichnet, dass** es sich bei dem Dienelastomer um ein Copolymer von Butadien und einem vinylaromatischen Monomer, insbesondere einen SBR, handelt.

11. Verfahren nach einem der vorhergehenden Ansprüche, **dadurch gekennzeichnet, dass** der Polymerisationsinitiator aus Ethyllithium, n-Butyllithium und Isobutyllithium ausgewählt wird.

12. Verfahren nach einem der vorhergehenden Ansprüche, **dadurch gekennzeichnet, dass** der Ausgangsstrom des

Reaktors rn, der die lebenden Ketten enthält, mit einem oder mehreren Polymerisationsstoppmitteln, die kontinuierlich in das Verfahren eingeleitet werden, in Kontakt gebracht wird.

13. Verfahren nach einem der Ansprüche 1 bis 11, **dadurch gekennzeichnet, dass** das lebende Dienelastomer im Ausgangsstrom des Reaktors n mit einem oder mehreren Polymerisationsstoppmitteln und einem oder mehreren Funktionalisierungs-, Kopplungs- oder Sternverzweigungsmitteln umgesetzt wird.

14. Verfahren nach einem der Ansprüche 1 bis 11, **dadurch gekennzeichnet, dass** das lebende Dienelastomer im Ausgangsstrom des Reaktors n mit einem oder mehreren Funktionalisierungs-, Kopplungs- oder Sternverzweigungsmitteln umgesetzt wird.

## Claims

1. Process for the continuous synthesis of a diene elastomer by means of n reactors r1 to rn, equipped with an internal stirring system, assumed to be perfectly stirred, and arranged in series, n ranging from 2 to 15, preferably from 2 to 9, the reactor r1 being fed by an input solution comprising a solvent, one or more monomers, an anionic polymerization initiator and a polar agent, one or more of the reactor(s) r2 to rn also being fed by reinjection of a purified solution comprising solvent and/or monomer(s), the purity of the or of each reinjected solution being such that the proportion of the number of dead chains in the output stream from the reactor rn is less than 30%, preferably less than 10%, of the number of living chains initiated in the reactor r1, the temperature of each reactor ranging from 20 to 150°C, preferably ranging from 30 to 120°C, and being greater than or equal to the temperature of the reactor which immediately precedes it, the temperature of the reactor rn being greater than the temperature of the reactor r1,

   - the weight amount Wi of monomer(s) introduced into the reactor r1 being such that

$$0.1 < \frac{W1}{\sum_{i=1}^{n} Wi} \leq 1$$

   the weight amount $W_{i'}$ of monomer(s) reinjected into the reactor ri', when $W_{i'} \neq 0$, i' ranging from 2 to n, being such that

$$0 \leq \frac{Wi'}{\sum_{1}^{n} Wi} < 0.9$$

   and such that Wi' represents from 5% to 100% by weight of the weight of the solution reinjected into the reactor ri', when $W_{i'} \neq 0$,
   where Wi is the weight amount of monomer(s) introduced into the reactor ri, i ranging from 1 to n,
   the weight amount of all of the monomers entering the reactors r1 to rn representing 5% to 25% by weight of the sum of the total weight inputs of the reactors r1 to rn,
   the overall weight conversion Ci" in each reactor ri" being such that

$$\frac{Cn}{n} - 0.2 < \frac{Ci''}{i''} < \frac{Cn}{n} + 0.2$$

   where

$$Ci'' = \frac{Pi''}{\sum_{1}^{n} Wi}$$

   where Pi" is the weight of polymer formed at the output of the reactor ri", i" ranging from 1 to n-1,

Cn is the overall weight conversion in the reactor rn, with

$$Cn = \frac{Pn}{\sum_{1}^{n} Wi}$$

where Pn is the weight of total polymer at the output of the reactor rn,
the diene elastomer obtained having a polydispersity index ranging from 1.1 to 2, preferably between 1.1 and 1.7, more preferentially ranging from 1.2 to 1.6.

**2.** Process according to Claim 1, **characterized in that** n ranges from 2 to 3, preferably n=2.

**3.** Process according to either one of the preceding claims, **characterized in that** one or more of the reinjected solutions contain(s) a polar agent.

**4.** Process according to any one of the preceding claims, **characterized in that** the or each constituent of the reinjected solution(s) is, before reinjection, purified independently by adsorption, liquid/liquid extraction, gas/liquid extraction, or distillation.

**5.** Process according to Claim 4, **characterized in that** the distillation is a single-stage distillation without reflux or a column distillation.

**6.** Process according to any one of Claims 4 to 5, **characterized in that** the residues of the purification process(es) for the or for each constituent are reinjected into the input solution feeding the first reactor.

**7.** Process according to Claim 6, **characterized in that** the residues of the purification process(es) of the or of each constituent constitute an extra contribution to the input solution.

**8.** Process according to Claim 6, **characterized in that** the residues of the process(es) for purifying the or each constitute the sole source of monomer and/or of solvent of the input solution

**9.** Process according to any one of the preceding claims, **characterized in that** the residence time in the reactor ri, i ranging from 1 to n, is between 1 and 60 minutes, preferably between 5 and 60 minutes, more preferably between 10 and 50 minutes.

**10.** Process according to any one of the preceding claims, **characterized in that** the diene elastomer is a copolymer of butadiene and of a vinyl aromatic monomer, in particular an SBR.

**11.** Process according to any one of the preceding claims, **characterized in that** the polymerization initiator is chosen from ethyllithium, n-butyllithium and isobutyllithium.

**12.** Process according to any one of the preceding claims, **characterized in that** the output stream which is from the reactor rn and which contains the living chains is brought into contact with one or more agents for stopping polymerization, injected into the process continuously.

**13.** Process according to any one of Claims 1 to 11, **characterized in that** the living diene elastomer included in the output stream from the reactor n is reacted with one or more agents for stopping polymerization and one or more functionalizing, coupling or star-branching agents.

**14.** Process according to any one of Claims 1 to 11, **characterized in that** the living diene elastomer included in the output stream from the reactor n is reacted with one or more functionalizing, coupling or star-branching agents.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 6313232 B
- EP 1318172 A
- EP 1829906 A
- US 5587420 A
- JP 63235305 A
- US 6372863 B1

### Littérature non-brevet citée dans la description


- **VILMIN, F. ; DUSSAP, C ; COSTE, N.** *Applied Spectroscopy,* 2006, vol. 60, 619-29